# EUROPEAN PATENT APPLICATION

(11) **EP 4 501 528 A1**
(43) Date of publication of application: **05.02.2025**
(21) Application number: 23777675.2
(22) Date of filing: 16.02.2023
(51) Int. Cl.: B23K 37/02, B23K 37/04, B23K 37/00, B65G 47/90

(54) **WELDING APPARATUS**

(30) Priority: 30.03.2022 CN 202220741663 U
(71) Applicant: Wuxi Lead Intelligent Equipment Co., Ltd., Wuxi, Jiangsu 214028 (CN)
(72) Inventor: MENG, Lingjun, Wuxi, Jiangsu 214028 (CN); SUN, Yizhou, Wuxi, Jiangsu 214028 (CN)
(74) Representative: Rau, Schneck & Hübner Patentanwälte Rechtsanwälte PartGmbB
(86) International application number: PCT/CN2023/076329
(87) International publication number: WO 2023/185296

(57) **Abstract**

The present disclosure relates to a welding device, comprising a base, a material-transporting mechanism, a first positioning mechanism, a second positioning mechanism and a welding mechanism. By providing the above welding device, the material-transporting mechanism transports the battery to abut against the first positioning mechanism, and then the second positioning mechanism located at the positioning position obtains the battery abutting against the first positioning mechanism; the battery is positioned in the first direction, the second direction, and the third direction by the first positioning mechanism and the second positioning mechanism; subsequently, the battery is transported to the welding position by the second positioning mechanism, and then is welded by the welding mechanism. Since the material-transporting mechanism cooperates with the first positioning mechanism to complete the positioning of the battery in the first direction in the process of transporting the battery by the material-transporting mechanism, and at the same time, the second positioning mechanism positions the workpiece in the second and third directions, there is no need to position the battery separately after loading it, which reduces the time for positioning and thus improves the welding efficiency of the welding device. (FIG. 1)

## Description

### CROSS-REFERENCE TO RELATED APPLICATIONS

The present disclosure claims priority to a Chinese patent application No. 202220741663.9 filed with the CNIPA on April 30, 2022 and entitled "WELDING DEVICE", which is hereby incorporated by reference in its entirety.

### TECHNICAL FIELD

The present disclosure relates to the technical field of lithium battery processing, and in particular to a welding device.

### BACKGROUND

In a lithium battery production line, a battery top cover needs to be welded. On conventional top cover welders, typically, loading, positioning, welding, and unloading occur in a straight line. In particular, after a battery is loaded, precisely positioning of the battery in length, width, and height is performed, and then the battery is transported to a welding station. Due to high precision requirements on welding, the positioning of the battery cannot be omitted. In addition, after the battery is loaded, the positioning of the battery separately in the three directions of length, width and height is time-consuming, resulting in low welding efficiency of the whole machine.

### SUMMARY

In view of the above, it is necessary to provide a welding device with high welding efficiency to solve the problem of low welding efficiency of the existing battery top cover.

A welding device, wherein the welding device includes:
a base;
a material-transporting mechanism provided on the base and configured for transporting a workpiece along a first direction;
a first positioning mechanism provided on the base and being capable of abutting against the workpiece transported by the material-transporting mechanism so as to position the workpiece in the first direction;
a second positioning mechanism provided on the base in a reciprocating manner along a second direction; and
a welding mechanism provided on the base;
the second positioning mechanism has a welding position and a positioning position during moving;
the second positioning mechanism, when located at the positioning position, is capable of obtaining the workpiece that abuts against the first positioning mechanism, and positioning the workpiece in the second direction and in a third direction;
when the second positioning mechanism is located at the welding position, the welding mechanism is capable of welding the workpiece on the second positioning mechanism;
wherein the first direction, the second direction and the third direction are mutually perpendicular to each other in pairs.

By providing the above welding device, the material-transporting mechanism transports the battery to abut against the first positioning mechanism, and then the second positioning mechanism located at the positioning position obtains the battery abutting against the first positioning mechanism; the battery is positioned in the first direction, the second direction, and the third direction by means of the first positioning mechanism and the second positioning mechanism. Subsequently, the battery is transported to the welding position by the second positioning mechanism, and then is welded by the welding mechanism. Since the material-transporting mechanism cooperates with the first positioning mechanism to complete the positioning of the battery in the first direction in the process of transporting the battery by the material-transporting mechanism, and at the same time, the second positioning mechanism positions the workpiece in the second and third directions, there is no need to position the battery separately after loading it, which reduces the time for positioning and thus improves the welding efficiency of the welding device.

In one of the embodiments, the material-transporting mechanism includes a material-transporting actuator, a connecting plate, a supporting component and a clamping assembly, the material-transporting actuator is provided on the base and is in transmission connection with the connecting plate so as to drive the connecting plate to move reciprocatively along the first direction, both the supporting component and the clamping assembly are provided on the connecting plate, the supporting component is configured for placing the workpiece, and the clamping assembly is configured for clamping and releasing the workpiece on the supporting component.

In one of the embodiments, the material-transporting mechanism includes at least two supporting components and at least two groups of clamping assemblies, each supporting component is configured for placing one workpiece, and each clamping assembly corresponds to one of the supporting components so as to clamp and release the workpiece on the corresponding supporting component.

In one of the embodiments, the first positioning mechanism includes a first bracket and a positioning plate, the first bracket is provided on the base, the positioning plate is provided on the first bracket, and the positioning plate is capable of abutting against the workpiece transported by the material-transporting mechanism.

In one of the embodiments, the first positioning mechanism further includes an adjusting actuator, which is provided on the first bracket and is in transmission connection with the positioning plate, so as to drive the positioning plate to move reciprocatively along the first direction.

In one of the embodiments, the second positioning mechanism includes a second bracket, a first positioning assembly, and a second positioning assembly, the second bracket is provided on the base in a reciprocating manner along the second direction, both the first positioning assembly and the second positioning assembly are provided on the second bracket, the first positioning assembly is capable of clamping and positioning in the second direction the workpiece which abuts against the first positioning mechanism, and the second positioning assembly is capable of clamping and positioning in the third direction the workpiece which abuts against the first positioning mechanism.

In one of the embodiments, the second positioning mechanism includes at least two groups of first positioning assemblies and at least two groups of second positioning assemblies, which are in one-to-one correspondence, each of the first positioning assemblies is capable of clamping and positioning in the second direction one workpiece which abuts against the first positioning mechanism, and each of the second positioning assemblies is capable of clamping and positioning in the third direction one workpiece which abuts against the first positioning mechanism.

In one of the embodiments, the material-transporting mechanism is provided on the base in a reciprocating manner along the second direction, and the material-transporting mechanism has a first position and a second position during moving;
the material-transporting mechanism, when located at the first position, is capable of obtaining the workpiece;
when the material-transporting mechanism is located at the second position, the workpiece transported by the material-transporting mechanism is capable of abutting against the first positioning mechanism.

In one of the embodiments, the base is provided with a mounting groove, and the welding device further includes a first translation actuator, which is provided in the mounting groove and is in transmission connection with the material-transporting mechanism.

In one of the embodiments, the welding device further includes a second translation actuator, which is provided on the base and is in transmission connection with the second positioning mechanism.

### BRIEF DESCRIPTION OF THE DRAWINGS

In order to clearly illustrate embodiments of the present disclosure or technical solutions in the prior art, accompanying drawings that need to be used in the description of the embodiments or the prior art will be briefly introduced as follows. Obviously, the drawings in the following description are only the embodiments of the present disclosure. For those skilled in the art, other drawings can also be obtained according to the disclosed drawings without creative efforts.
FIG. 1 is a structural schematic diagram of a welding device provided by an embodiment of the present disclosure;
FIG. 2 is a left-view structural schematic diagram of the welding device shown in FIG. 1;
FIG. 3 is a top-view structural schematic diagram of the welding device shown in FIG. 1;
FIG. 4 is a structural schematic diagram of a material-transporting mechanism in the welding device shown in FIG. 1.
FIG. 5 is a left-view structural schematic diagram of the material-transporting mechanism shown in FIG. 4.
FIG. 6 shows a structural schematic diagram of a second positioning mechanism in the welding device shown in FIG. 1.

### DETAILED DESCRIPTION

In order to make the above objects, features and advantages of the present disclosure more clearly understood, specific embodiments of the present disclosure will be described in detail below with reference to the accompanying drawings. In a following description, numerous specific details are set forth in order to provide a thorough understanding of the present disclosure. However, the present disclosure can be implemented in many other ways different from those described here, and those skilled in the art can make similar improvements without violating a connotation of the present disclosure. Therefore, the present disclosure is not limited by the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for the convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only used for descriptive purposes and should not be understood as indicating or implying relative importance or implying a number of indicated technical features. Therefore, a feature delimited with "first", "second" may expressly or implicitly include at least one of those features. In a description of the present disclosure, "a plurality" means at least two, such as two, three, etc., unless expressly and specifically defined otherwise.

In the present disclosure, unless expressly specified and limited otherwise, terms "installed", "communicated", "connected", "fixed" and other terms should be interpreted in a broad sense, for example, it can be a fixed connection, a detachable connection, or an integrated; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present disclosure can be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is higher than the second feature in a horizontal direction. The first feature being "below", "under" and "below" the second feature may mean that the first feature is directly below or obliquely below the second feature, or simply means that the first feature is smaller than the second feature in a horizontal direction.

It should be noted that when an element is referred to as being "fixed to" or "arranged on" another element, it can be directly on another element, or there may be an intervening element therebetween. When an element is referred to as being "connected" to another element, it can be directly connected to another element or intervening elements may also be present. Terms "vertical", "horizontal", "upper", "lower", "left", "right" and similar expressions used here are only for illustration purposes rather than indicating the only implementation.

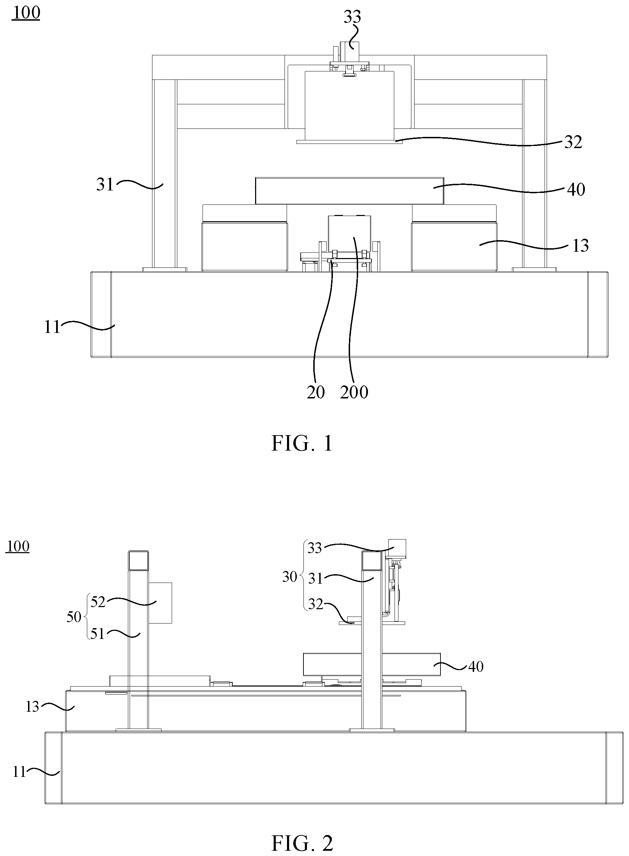

As shown in FIG. 1 to FIG. 3, an embodiment of the present disclosure provides a welding device 100, including a base 11, a material-transporting mechanism 20, a first positioning mechanism 30, a second positioning mechanism 40 and a welding mechanism 50.

The material-transporting mechanism 20, the first positioning mechanism 30, the second positioning mechanism 40 and the welding mechanism 50 are all provided on the base 11, the material-transporting mechanism 20 is configured for transporting a workpiece 200 along a first direction, the first positioning mechanism 30 is capable of abutting against the workpiece 200 transported by the material-transporting mechanism 20 so as to position the workpiece 200 in the first direction, the second positioning mechanism 40 moves reciprocatively along a second direction, and the second positioning mechanism 40 has a welding position and a positioning position during moving.

The second positioning mechanism 40, when located at the positioning position, is capable of obtaining the workpiece 200 that abuts against the first positioning mechanism 30, and positioning the workpiece 200 in the second direction and in a third direction.

When the second positioning mechanism 40 is located at the welding position, the welding mechanism 50 is capable of welding the workpiece 200 on the second positioning mechanism 40.

Wherein the first direction, the second direction and the third direction are mutually perpendicular to each other in pairs. In FIG. 1, the first direction is the up-down direction, the second direction is the direction perpendicular to the paper surface, and the third direction is the left-right direction. In FIG. 2, the first direction is the up-down direction, the second direction is the left-right direction, and the third direction is the direction perpendicular to the paper surface.

Additionally, it should be noted that in the present embodiment, the workpiece 200 is a battery, and the welding mechanism 50 is configured for welding the top cover of the battery. In other embodiments, the workpiece 200 could also be other products that require welding.

By providing the above welding device, the material-transporting mechanism 20 transports the battery to abut against the first positioning mechanism 30, and then the second positioning mechanism 40 located at the positioning position obtains the battery abutting against the first positioning mechanism 30; the battery is positioned in the first direction, the second direction, and the third direction by means of the first positioning mechanism 30 and the second positioning mechanism 40; subsequently, the battery is transported to the welding position by the second positioning mechanism 40, and then is welded by the welding mechanism 50. Since the material-transporting mechanism 20 cooperates with the first positioning mechanism 30 to complete the positioning of the battery in the first direction in the process of transporting the battery by the material-transporting mechanism 20, and at the same time, the second positioning mechanism 40 positions the workpiece 200 in the second and third directions, there is no need to position the battery separately after loading it, which reduces the time for positioning and thus improves the welding efficiency of the welding device.

In some embodiments, the material-transporting mechanism 20 is provided on the base 11 in a way that enables its reciprocating movement along the second direction, and the material-transporting mechanism 20 has a first position and a second position during moving.

The material-transporting mechanism 20, when located at the first position, is capable of obtaining the workpiece 200; when the material-transporting mechanism 20 is located at the second position, the workpiece 200 transported by the material-transporting mechanism 20 is capable of abutting against the first positioning mechanism 30.

Initially, the material-transporting mechanism 20 is at the first position, and the workpiece 200 may be placed on the material-transporting mechanism 20 manually or by a robot arm. Then, the material-transporting mechanism 20 moves to the second position and transports the workpiece 200 along the first direction to abut against the first positioning mechanism 30.

It will be appreciated that when the material-transporting mechanism 20 is at the second position, the second positioning mechanism 40 may obtain the workpiece 200 on the material-transporting mechanism 20, and the corresponding material-transporting mechanism 20 may also obtain the workpiece 200 on the second positioning mechanism 40. In this way, after the workpiece 200 is welded, the second positioning mechanism 40 moves back to the positioning position, so as to transport the workpiece 200 to the material-transporting mechanism 20 located at the second position.

Meanwhile, after the material-transporting mechanism 20 obtains the welded workpiece 200, the material-transporting mechanism 20 may move back to the first position for unloading, and may also move to the third position for unloading, and it is only necessary to ensure that the second position keeps clear of the first position and the third position, thereby preventing the first positioning mechanism 30 and the second positioning mechanism 40 from influencing the loading and unloading of the material-transporting mechanism 20.

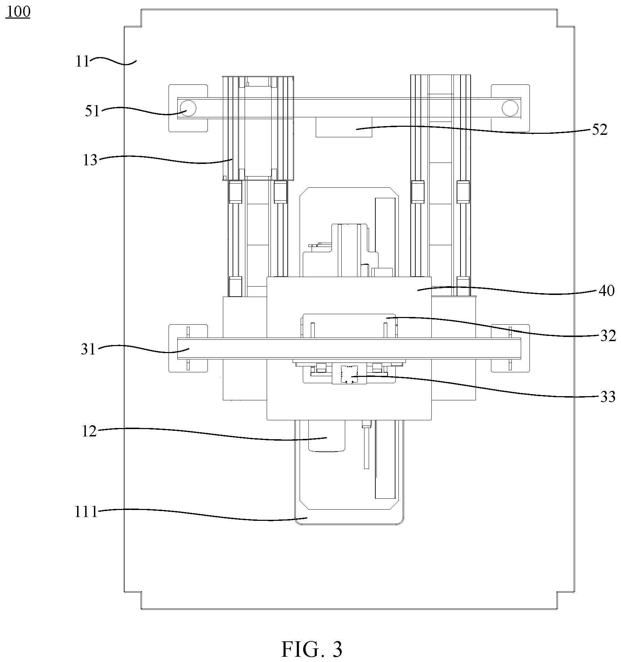

Further, the base 11 is provided with a mounting groove 111, and the material-transporting mechanism 20 is provided in the mounting groove 111 in a way that enables its reciprocating movement along the second direction. As can be seen from FIG. 1 and FIG. 3, the material-transporting mechanism 20 is located in the lower layer, and the first positioning mechanism 30 and the second positioning mechanism 40 are located in the upper layer. After the material-transporting mechanism 20 moves to the second position, it pushes the workpiece 200 up to abut against the first positioning mechanism 30, thereby transporting the workpiece 200 to the second positioning mechanism 40 and positioning the workpiece, while loading and unloading to the material-transporting mechanism 20 occur in the lower layer.

In some embodiments, the welding device further includes a first translation actuator 12, which is provided in the mounting groove 111 and is in transmission connection with the material-transporting mechanism 20, so as to drive the material-transporting mechanism 20 to move reciprocatively along the second direction.

In practice, the first translation actuator 12 is an electric cylinder.

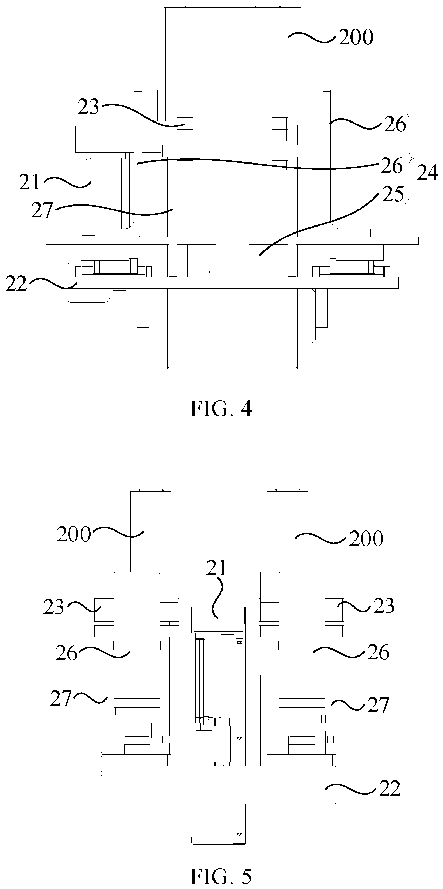

Please refer to FIGS. 4 and 5, in some embodiments, the material-transporting mechanism 20 includes a material-transporting actuator 21, a connecting plate 22, a supporting component 23 and a clamping assembly 24, the material-transporting actuator 21 is provided on the base 11 and is in transmission connection with the connecting plate 22 so as to drive the connecting plate 22 to move reciprocatively along the first direction. Both the supporting component 23 and the clamping assembly 24 are provided on the connecting plate 22. The supporting component 23 is configured for placing the workpiece 200, and the clamping assembly 24 is configured for clamping and releasing the workpiece 200 on the supporting component 23.

After the workpiece 200 is placed on the supporting component 23, it is clamped and fixed by the clamping assembly 24. When the workpiece 200 needs to be conveyed to the second positioning mechanism 40 or to the next process, the clamping assembly 24 releases the workpiece 200.

In some embodiments, the clamping assembly 24 includes a clamping actuator 25 and a clamping jaw 26, and the clamping actuator 25 is provided on the connecting plate 22 and is in transmission connection with the clamping jaw 26, so to drive the clam jaw 26 to clamp and release the workpiece 200.

In practice, the clamping actuator 25 is a pneumatic claw.

In some embodiments, the material-transporting mechanism 20 further includes a guiding part 27 and an elastic part, the guiding part 27 is connected to the connecting plate 22, the supporting component 23 is connected to the guiding part 27 in a way that enables its reciprocating movement along the first direction. The elastic part is connected between the connecting plate 22 and the supporting component 23, and is configured for providing a force for keeping the supporting component 23 away from the connecting plate 22.

It can be seen from FIG. 4 that when positioning the battery in the height direction, the material-transporting actuator 21 drives the connecting plate 223 to rise until the battery abuts against the first positioning mechanism 30. After the battery is subjected to force, it may depress the supporting component 23 and the elastic part, thereby avoiding rigid contact between the battery and the first positioning mechanism 30 and preventing damage to the battery.

Similarly, it is understandable that the guiding part 27 and the elastic part may prevent damage to the battery during positioning the battery in the height direction, and similar designs are adopted to prevent damage to the battery when positioning the battery in the second and third directions.

For example, by providing the first mounting plate and the second mounting plate, the first mounting plate is provided on the connecting plate 12 in a way that enables its reciprocating movement along the second direction, the second mounting plate is provided on the first mounting plate in a way that enables its reciprocating movement along the third direction, and both the clamping assembly 24 and the guiding part 27 are provided on the second mounting plate. Meanwhile, in order to prevent the workpiece 200 from moving along the second direction and the third direction in the process of transporting the workpiece 200, a return spring may be provided, so that the first mounting plate and the second mounting plate may be kept fixed provided that they are not subjected to external force.

In some embodiments, the material-transporting mechanism 20 includes at least two supporting components 23 and at least two groups of clamping assemblies 24, each supporting component 23 is configured for placing one workpiece 200, and each clamping assembly 24 corresponds to one of the supporting components 23, so as to clamp and release the workpiece 200 on the corresponding supporting component 23.

In this way, at least two workpieces 200 may be transported simultaneously, so that at least two workpieces 200 may be processed simultaneously, therefore further improving the welding efficiency.

In some embodiments, the first positioning mechanism 30 includes a first bracket 31 and a positioning plate 32. The first bracket 31 is provided on the base 11, and the positioning plate 32 is provided on the first bracket 31. The positioning plate 32 is capable of abutting against the workpiece 200 transported by the material-transporting mechanism 20.

As shown in FIGS. 1 and 2, when the material-transporting mechanism 20 is moved to the second position, the positioning plate 32 is positioned above the material-transporting mechanism 20. During upward transporting of the workpiece 200 by the material-transporting mechanism 20, the workpiece 200 may abut against the positioning plate 32. After the workpiece 200 abuts against the positioning plate 32, the material-transporting mechanism 20 stops transporting the workpiece 200, so that positioning of the workpiece 200 in the first direction is completed in the process of transporting.

Further, the first positioning mechanism 30 further includes an adjusting actuator 33, which is provided on the first bracket 31 and is in transmission connection with the positioning plate 32, so as to drive the positioning plate 32 to move reciprocatively along the first direction and thus adjust the height for positioning the workpiece 200 as needed.

It should be explained that in the process of welding the battery, positioning the battery in the height direction is configured for adjusting the defocusing distance, so as to avoid welding defects due to non-compliance with the spacing between the battery and the welding assembly 52. Therefore, for different welding requirements, by adjusting the position of the positioning plate 32 by means of the adjusting actuator 33, it is possible to adjust the height of the battery after being positioned.

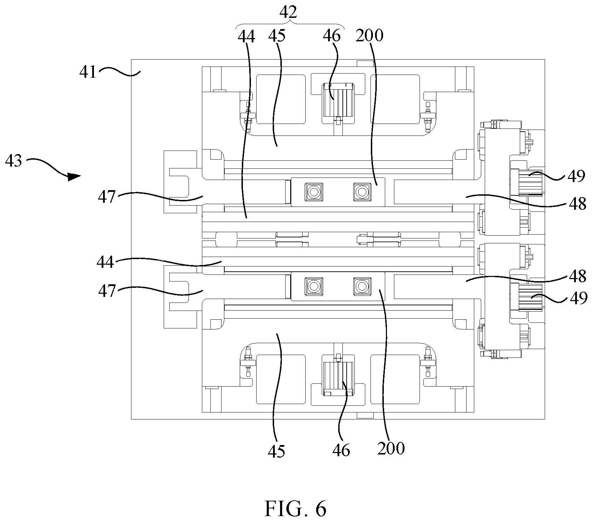

Please refer to FIG. 6, in some embodiments, the second positioning mechanism 40 includes a second bracket 41, a first positioning assembly 42, and a second positioning assembly 43. The second bracket 41 is provided on the base 11 in a way that enables its reciprocating movement along the second direction. Both the first positioning assembly 42 and the second positioning assembly 43 are provided on the second bracket 41. The first positioning assembly 42 is capable of clamping and positioning the workpiece 200, which abuts against the first positioning mechanism 30, in the second direction. The second positioning assembly 43 is capable of clamping and positioning the workpiece 200, which abuts against the first positioning mechanism 30, in the third direction.

In some embodiments, the first positioning assembly 42 includes a first fixed block 44, a first movable block 45, and a first positioning actuator 46. The first fixed block 44 and the first movable block 45 are arranged at intervals along the second direction on the second bracket 41, and the first fixed block 44 is fixedly connected to the second bracket 41. The first movable block 45 is provided in a way that enables its reciprocating movement along the second direction, and the first positioning actuator 46 is provided on the second bracket 41 and is in transmission connection with the first movable block 45, so as to drive the first movable block 45 to move reciprocatively along the second direction, thus moving closer to and farther away from the first fixed block 44.

Further, the second positioning assembly 43 includes a second fixed block 47, a second movable block 48 and a second positioning actuator 49. The second fixed block 47 and the second movable block 48 are arranged on the second bracket 41 at intervals along the third direction, and the second fixed block 47 is fixedly connected to the second bracket 41. The second movable block 48 is provided in a way that enables its reciprocating movement along the third direction. The second positioning actuator 49 is provided on the second bracket 41 and is in transmission connection with the second movable block 48, so as to drive the second movable block 48 to move reciprocatively along the third direction, thus moving closer to and farther away from the second fixed block 47.

In practice, the first positioning actuator 46 and the second positioning actuator 49 are both gas cylinders.

In some embodiments, the second positioning mechanism 40 includes at least two groups of first positioning assemblies 42 and at least two groups of second positioning assemblies 43, which are in one-to-one correspondence. Each of the first positioning assemblies 42 is capable of clamping and positioning one workpiece 200, which abuts against the first positioning mechanism 30, in the second direction. Each of the second positioning assemblies 43 is capable of clamping and positioning one workpiece 200, which abuts against the first positioning mechanism 30, in the third direction.

In this way, each set of first positioning assemblies 42 and the corresponding set of the second positioning assemblies 43 may clamp and position one workpiece 200, so as to clamp and position at least two workpieces 200 at the same time. In combination with the above embodiment, the material-transporting mechanism 20 includes at least two supporting components 23 and at least two groups of clamping assemblies 24, so that at least two workpieces 200 may be welded simultaneously, therefore improving the welding efficiency.

In addition, as shown in FIG. 6, the first fixed blocks 44 of the two first positioning assemblies 42 are provided adjacent to each other. In this way, the spacing between the two batteries may be reduced. Of course, when more groups of the first positioning assemblies 42 are provided, other arrangements may be adopted, which is not limited herein.

Please refer to FIG. 3, in some embodiments, the welding device 100 further includes a second translation actuator 13, which is provided on the base 11 and is in transmission connection with the second positioning mechanism 40, so as to drive the second positioning mechanism 40 to move reciprocatively along the second direction.

Further, there are provided two second translation actuators 13, which are arranged at intervals along the third direction. The second bracket 41 is in transmission connection with the two second translation actuators 13 at the same time, so as to improve the driving stability of the second bracket 41.

In practice, the second translation actuator 13 is an electric cylinder.

Please refer to FIGS. 2 and 3, in some embodiments, the welding mechanism 50 includes a third bracket 51 and a welding assembly 52. The third bracket 51 is provided on the base 11, and the welding assembly 52 is provided on the third bracket 51, so as to weld the workpiece 200 on the second positioning mechanism 40 at the welding position.

To facilitate understanding of the technical solution of the present disclosure, the working process of the welding device in the above embodiment is described with reference to FIG. 2.

Assuming that the material-transporting mechanism 20 has a first position, a second position, and a third position during moving along the second direction, and the first position and the third position are respectively located at the left and right sides of the second position.

Initially, the material-transporting mechanism 20 is located at the first position, the battery is placed on the supporting component 23 manually or by a robot arm, and then the clamping assembly 24 clamps and fixes the battery on the supporting component 23. Next, the first translation actuator 12 drives the material-transporting mechanism 20 to the right to the second position, i.e. directly below the positioning plate 32.

The material-transporting actuator 21 drives the connecting plate 22 to rise until the battery passes through the second bracket 41 and abuts against the positioning plate 32. Then the first positioning assembly 42 and the second positioning assembly 43 clamp and position the battery in the second direction and the third direction, respectively, i.e., to clamp and position the battery in the length direction and the width direction of the battery. After the battery has been clamped and positioned, the clamping assembly 24 releases the battery and the material-transporting actuator 21 drives the connecting plate 22 to descend.

After the second positioning mechanism 40 obtains the battery, it moves to the left to the welding position, that is, below the welding component 52, where the top cover of the battery is welded through the welding assembly 52. After the welding is completed, the second positioning mechanism 40 moves to the right and returns to the positioning position.

The material-transporting actuator 21 drives the connecting plate 22 to rise until the supporting component 23 is in contact with the battery, the clamping assembly 24 clamps the battery, and then the first positioning assembly 42 and the second positioning assembly 43 releases their clamping on the battery. Next, the material-transporting actuator 21 drives the connecting plate 22 to descend, and after descending, the material-transporting mechanism 20 is driven to the right by the first translation actuator 12 and moves to the right to the third position for unloading.

It should be noted that the clamping assembly 24 clamps the lower part of the battery, while the upper part of the battery may pass through the second bracket 41, and the first positioning assembly 42 and the second positioning assembly 43 clamp and position the upper part of the battery, so that they do not interfere with each other.

The technical features of the above embodiments can be combined arbitrarily. For the sake of brevity, not all possible combinations of the individual technical features of the above embodiments are described. However, a combination of these technical features shall be considered to be within the scope of the present specification, as long as there is no contradiction in the combination.

The above embodiments are merely expressions of a few implementations of the present disclosure described in a specific and detailed manner, and are not to be construed as limitation to the scope of the present disclosure. It is to be noted that for a person of ordinary skill in the art, various modifications and improvements could be made without departing from the principle of the present disclosure, and shall fall into the protection scope of the present disclosure. Therefore, the protection scope of the present disclosure shall be subject to the appended claims.

## Claims

1. A welding device, comprising:
a base;
a material-transporting mechanism provided on the base and configured for transporting a workpiece along a first direction;
a first positioning mechanism provided on the base and being capable of abutting against the workpiece transported by the material-transporting mechanism so as to position the workpiece in the first direction;
a second positioning mechanism provided on the base in a reciprocating manner along a second direction; and
a welding mechanism provided on the base;
the second positioning mechanism has a welding position and a positioning position during moving;
the second positioning mechanism, when located at the positioning position, is capable of obtaining the workpiece that abuts against the first positioning mechanism, and positioning the workpiece in the second direction and in a third direction;
when the second positioning mechanism is located at the welding position, the welding mechanism is capable of welding the workpiece on the second positioning mechanism;
wherein the first direction, the second direction and the third direction are mutually perpendicular to each other in pairs.

2. The welding device according to claim 1, wherein the material-transporting mechanism comprises a material-transporting actuator, a connecting plate, a supporting component and a clamping assembly, the material-transporting actuator is provided on the base and is in transmission connection with the connecting plate so as to drive the connecting plate to move reciprocatively along the first direction, both the supporting component and the clamping assembly are provided on the connecting plate, the supporting component is configured for placing the workpiece, and the clamping assembly is configured for clamping and releasing the workpiece on the supporting component.

3. The welding device according to claim 2, wherein the material-transporting mechanism comprises at least two supporting components and at least two groups of clamping assemblies, each supporting component is configured for placing one workpiece, and each clamping assembly corresponds to one of the supporting components so as to clamp and release the workpiece on the corresponding supporting component.

4. The welding device according to claim 1, wherein the first positioning mechanism comprises a first bracket and a positioning plate, the first bracket is provided on the base, the positioning plate is provided on the first bracket, and the positioning plate is capable of abutting against the workpiece transported by the material-transporting mechanism.

5. The welding device according to claim 4, wherein the first positioning mechanism further comprises an adjusting actuator, which is provided on the first bracket and is in transmission connection with the positioning plate, so as to drive the positioning plate to move reciprocatively along the first direction.

6. The welding device according to claim 1, wherein the second positioning mechanism comprises a second bracket, a first positioning assembly, and a second positioning assembly, the second bracket is provided on the base in a reciprocating manner along the second direction, both the first positioning assembly and the second positioning assembly are provided on the second bracket, the first positioning assembly is capable of clamping and positioning in the second direction the workpiece which abuts against the first positioning mechanism, and the second positioning assembly is capable of clamping and positioning in the third direction the workpiece which abuts against the first positioning mechanism.

7. The welding device according to claim 6, wherein the second positioning mechanism comprises at least two groups of first positioning assemblies and at least two groups of second positioning assemblies, which are in one-to-one correspondence, each of the first positioning assemblies is capable of clamping and positioning in the second direction one workpiece which abuts against the first positioning mechanism, and each of the second positioning assemblies is capable of clamping and positioning in the third direction one workpiece which abuts against the first positioning mechanism.

8. The welding device according to any one of claims 1 to 7, wherein the material-transporting mechanism is provided on the base in a reciprocating manner along the second direction, and the material-transporting mechanism has a first position and a second position during moving;
the material-transporting mechanism, when located at the first position, is capable of obtaining the workpiece;
when the material-transporting mechanism is located at the second position, the workpiece transported by the material-transporting mechanism is capable of abutting against the first positioning mechanism.

9. The welding device according to claim 8, wherein the base is provided with a mounting groove, and the welding device further comprises a first translation actuator, which is provided in the mounting groove and is in transmission connection with the material-transporting mechanism.

10. The welding device according to any one of claims 1 to 7, further comprising a second translation actuator, which is provided on the base and is in transmission connection with the second positioning mechanism.
